# EUROPEAN PATENT APPLICATION

(11) **EP 4 395 277 A1**
(43) Date of publication of application: **03.07.2024**
(21) Application number: 22860558.0
(22) Date of filing: 24.08.2022
(51) Int. Cl.: H04L 65/40

(54) **FLASHING METHOD, APPARATUS AND SYSTEM FOR ELECTRONIC CONTROL UNIT, AND DEVICE AND STORAGE MEDIUM**

(30) Priority: 27.08.2021 CN 202110998168
(71) Applicant: Beijing CHJ Information Technology Co., Ltd., Beijing 101399 (CN)
(72) Inventor: ZHANG, Zhende, Beijing 101399 (CN)
(74) Representative: Maiwald GmbH
(86) International application number: PCT/CN2022/114599
(87) International publication number: WO 2023/025212

(57) **Abstract**

A flashing method for an electronic control unit. The method comprises: acquiring a request message to be processed, wherein the request message comprises an identifier of a target domain and an identifier of an electronic control unit; at a start moment of a receiving slot corresponding to the electronic control unit, reading, from the request message, the identifier of the target domain and the identifier of the electronic control unit, and sending the request message to the electronic control unit by means of the target domain; and at a start moment of a sending slot corresponding to the electronic control unit, receiving, by means of the target domain, a response message generated by the electronic control unit according to the request message.

## Description

### CROSS REFERENCE TO RELATED APPLICATIONS

This application is based on and claims priority to Chinese patent application No. 202110998168.6, filed on August 27, 2021, the entire contents of which are incorporated herein by reference.

### TECHNICAL FIELD

The disclosure relates to a field of automotive technologies, in particular to a method for flashing an electronic control unit, an apparatus for flashing an electronic control unit, a system for flashing an electronic control unit, a device and a storage medium.

### BACKGROUND

Currently, automotive Ethernet is widely used in the automotive field. The automotive network topology gradually changes to a network topology of taking Ethernet as a backbone network and forming a sub-network with several functional domain controllers. A traditional controller area network (CAN) bus or a local interconnect network (LIN) bus is still used in the functional domain controller. The functional domain controllers are connected through the highperformance Ethernet, and data exchange is realized through an Ethernet gateway.

Based on the network topology, when the over the air (OTA) technology is used to flash multiple electronic control units (ECUs) of a vehicle, there is a problem that since bandwidth of the backbone network is not fully utilized, a flashing efficiency is low. In addition, when the data from each domain controller is transmitted over the backbone network, there will be data collision and frame loss, which will easily lead to a failure of flashing the ECU, and also increase a complexity of flashing software of a client.

### SUMMARY

In order to solve the above technical problems or at least partially solve the above technical problems, the disclosure provides a method for flashing an electronic control unit (ECU), an apparatus for flashing an ECU, a system for flashing an ECU, a device and a storage medium, which can fully utilize bandwidth of a backbone network, improve a flashing efficiency and an ECU flashing success rate.

According to a first aspect of embodiments of the disclosure, a method for flashing an ECU is provided. The method includes:
obtaining a request message to be processed, in which the request message includes an identification (ID) of a target domain and an ID of an ECU to be flashed;
at a starting moment of a reception time slot corresponding to the ECU, sending the request message to the ECU through the target domain based on the ID of the target domain and the ID of the ECU; and
at a starting moment of a transmission time slot corresponding to the ECU, receiving a response message generated by the ECU based on the request message through the target domain.

According to a second aspect of embodiments of the disclosure, an apparatus for flashing an ECU is provided. The apparatus includes:
an obtaining module, configured to obtain a request message to be processed, in which the request message includes an ID of a target domain and an ID of an electronic control unit to be flashed;
a sending module, configured to, at a starting moment of a reception time slot corresponding to the electronic control unit, send the request message to the electronic control unit through the target domain based on the ID of the target domain and the ID of the electronic control unit; and
a receiving module, configured to, at a starting moment of a transmission time slot corresponding to the electronic control unit, receive a response message generated by the electronic control unit based on the request message through the target domain.

According to a third aspect of embodiments of the disclosure, a system for flashing an ECU is provided. The system includes: an upgrade management module, one or more target domains and one or more ECUs. The upgrade management module is connected to the one or more target domains via a network, and the one or more target domains are connected to the one or more ECUs via a bus. The upgrade management module is configured to implement the above method for flashing an ECU.

According to a fourth aspect of embodiments of the disclosure, an electronic device is provided. The electronic device includes:
a memory;
a processor; and
computer programs; in which
the computer programs are stored in the memory, and when the computer programs are executed by a processor, the above method for flashing an ECU is implemented.

According to a fifth aspect of embodiments of the disclosure, a computer-readable storage medium having computer programs stored thereon is provided. When the computer programs are executed by a processor, the steps of the above method for flashing an ECU are implemented.

According to a sixth aspect of embodiments of the disclosure, a computer program product including computer programs or instructions is provided. When the computer programs or instructions are executed by a processor, the above method for flashing an ECU is implemented.

According to a method for flashing an ECU, an apparatus for flashing an ECU, a system for flashing an ECU, a device and a storage medium provided by the embodiments of the disclosure, the flashing method includes: obtaining a request message to be processed, in which the request message includes an ID of a target domain and an ID of an ECU to be flashed; at a starting moment of a reception time slot corresponding to the ECU, reading out the ID of the target domain and the ID of the ECU in the request message and sending the request message to the ECU through the target domain; and at a starting moment of a transmission time slot corresponding to the ECU, returning a response message generated by the ECU according to the request message to the upgrade management module through the target domain. The disclosure is capable of transmitting request messages or response messages in an orderly manner, which effectively avoids the problem of data collision and frame loss during transmission of a large amount of data, increases a success rate of flashing, and further reduces a complexity of flashing software of the client. In addition, the disclosure makes full use of the bandwidth of the backbone network to ensure an accuracy of the transmitted data, and also improves a flashing efficiency and reduces flashing time.

### BRIEF DESCRIPTION OF THE DRAWINGS

FIG. 1 is a schematic diagram of a network topology provided by an embodiment of the disclosure.
FIG. 2 is a schematic diagram of a network topology provided by an embodiment of the disclosure.
FIG. 3 is a flowchart of a method for flashing an ECU provided by an embodiment of the disclosure.
FIG. 4 is a schematic diagram of data transmission provided by an embodiment of the disclosure.
FIG. 5 is a flowchart of a method for flashing an ECU provided by an embodiment of the disclosure.
FIG. 6 is a block diagram of an apparatus for flashing an ECU provided by an embodiment of the disclosure.
FIG. 7 is a block diagram of a system for flashing an ECU provided by an embodiment of the disclosure.
FIG. 8 is a block diagram of an electronic device provided by an embodiment of the disclosure.

### DETAILED DESCRIPTION

In order to understand the above objects, features and advantages of the disclosure more clearly, the solutions of the disclosure will be further described below. It should be noted that without conflict, the embodiments of the disclosure and features of embodiments may be combined with each other.

Although many specific details are set forth in the following description to fully understand the disclosure, the disclosure can also be implemented in other ways different from those described here. Clearly, the embodiments described in the specification are only part of the embodiments of the disclosure, and not all of the embodiments.

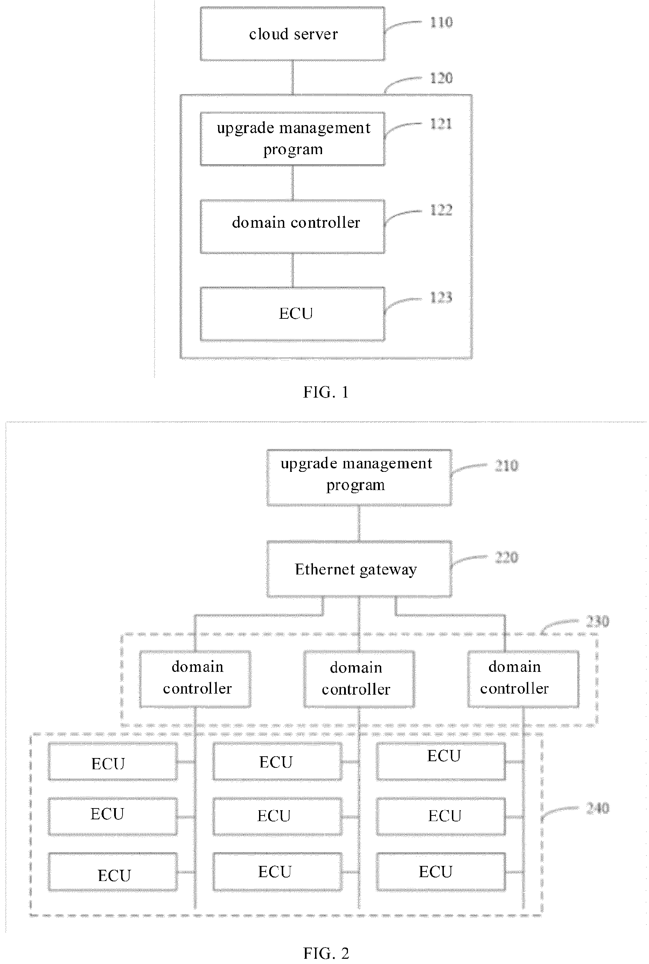

In detail, the over the air (OTA) technology is used to flash an ECU of a vehicle. As illustrated in FIG. 1, it mainly includes a cloud server 110 (OTA cloud platform) and a vehicle terminal 120. The vehicle terminal 120 includes an upgrade management program (OTA Manager) 121, a domain controller 122 and an ECU 123. The cloud server 110 is configured to implement functions of the OTA cloud, such as upgrade model management, upgrade task and upgrade package management. The upgrade management program 121 is a management program responsible for connecting the vehicle terminal 120 and the cloud server 110, to realize secure communication of the cloud, which includes functions of protocol communication link management, upgrade instruction reception, upgrade status transmission, upgrade package download, upgrade package decryption, differential package reconstruction and the like.

On vehicles using the automotive Ethernet, the upgrade management program 121 connects a large number of ECUs 123 configured in the vehicle based on the network topology of the automotive Ethernet and performs overall and coordinated control, to make the vehicle more intelligent. The ECU 123 refers to a control device consisting of integrated circuits used to realize functions such as data analyzing, processing and transmission, which can be installed on an intelligent hardware of the vehicle. Currently, in the network topology of the vehicle, as illustrated in FIG. 2, an upgrade management program 210 is connected to an Ethernet gateway 220. The Ethernet gateway 220 is connected to a plurality of domain controllers 230. That is, the Ethernet is used as a backbone network and the domain controllers 230 are used as a sub-network. Each of the domain controllers 230 is connected to one or more ECUs 240 through a CAN bus or a LAN bus, and the Ethernet gateway 220 is used as a control bus to realize data exchange, and thus flashing of the ECU 240 can be completed.

The ECUs are flashed through the network topology of the vehicle. In the related art, the ECUs are flashed one by one using OTA. When using this method, the bandwidth of the backbone network may not be fully utilized, and the flashing efficiency may be low and the flashing time may be long. If ECUs connected by at most 3 CAN buses are flashed in parallel by using OTA in a single domain controller, the flashing rate will be improved to a certain extent. However, the bandwidth of the backbone network is still not fully utilized, and the flashing efficiency is not high. If OTA parallel flashing is implemented for multiple functional domains simultaneously, since the backbone network uses the Ethernet, which adopts traditional unreliable delivery and lacks time synchronization, data transmission of each domain controller will cause a large number of collisions on the network and may even cause frame loss, which may easily lead to a flashing failure and also increase the complexity of flashing the software of the client. In view of the problems existing in the above process of flashing the ECU, the method for flashing an ECU in the embodiments of the disclosure is further described in detail in one or more of the following embodiments.

In detail, a time sensitive Ethernet in the embodiments of the disclosure may be a standard of Time Sensitive Network (TSN) defined by the Institute of Electrical and Electronics Engineers (IEEE), for example, the IEEE 802.1 protocol. The domain controllers connected to the backbone network at least support the IEEE802.1AS protocol and the IEEE802.1QBV protocol in the time-sensitive protocol. The IEEE802.1AS protocol defines a clock synchronization mechanism of an entire network, and each domain controller connected to the backbone network can perform clock synchronization based on the IEEE802.1AS protocol. The IEEE802.1QBV protocol uses Time Aware Shaper (TAS) to allocate a specific time slot for time-sensitive critical data with a higher priority. At a specified time node, all nodes in the network must give priority to ensuring transmission of important data frames. The ECU can divide time slots for transmitting request messages based on characteristics of the IEEE802.1QBV protocol.

The Ethernet involved in the embodiments of the disclosure can be a time-sensitive Ethernet. Based on the time-sensitive Ethernet, a time slot corresponding to each ECU to be flashed is determined in advance, and then the upgrade management module sends a request message corresponding to an ECU to be flashed to a target domain through the Ethernet at a starting moment of a reception time slot corresponding to the ECU. Meanwhile, the target domain forwards the request message to the ECU, and the ECU generates a response message based on the request message and sends the response message to the target domain. At a starting moment of a transmission time slot corresponding to the ECU, the target domain returns the response message to the upgrade management module through the time-sensitive Ethernet. The request messages or the response messages can be transmitted in an orderly manner, which effectively avoids the problem of data collision and frame loss during transmission of a large amount of data, increases the success rate of flashing, and further reduces the complexity of flashing the software of the client. In addition, the disclosure fully utilizes the bandwidth of the backbone network to ensure the accuracy of the transmitted data, and also improves the flashing efficiency and reduces the flashing time.

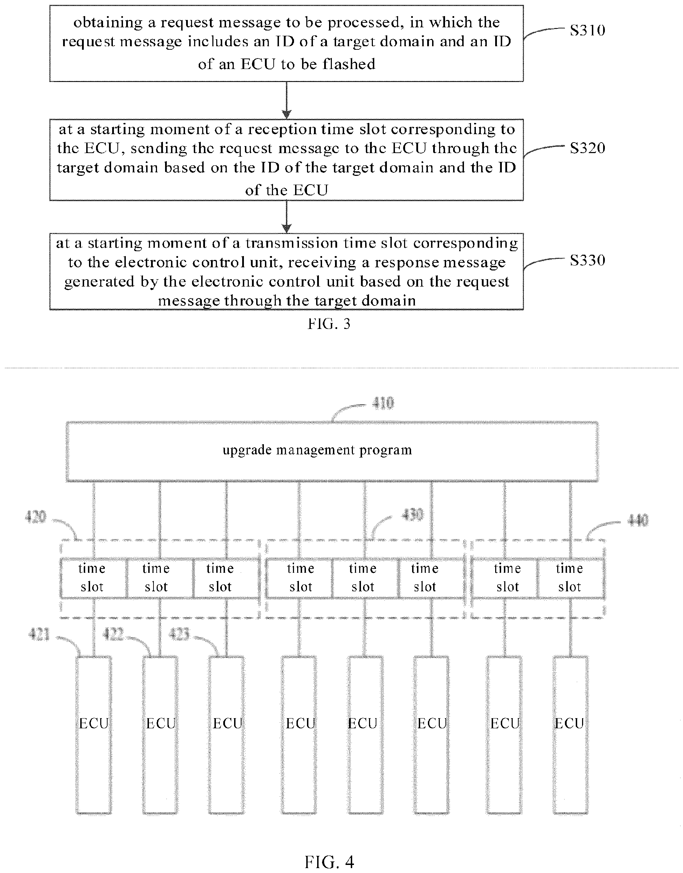

FIG. 3 is a flowchart of a method for flashing an ECU provided by an embodiment of the disclosure. The method can be performed based on the network topology of FIG. 1, which uses the time-sensitive Ethernet as the backbone network to connect the domain controller, and a sub-network can use a CAN bus or a LAN bus to connect the domain controller and the ECU. The method includes the following steps S310 to S330 as shown in FIG. 3.

It is understandable that before flashing the ECU, time synchronization needs to performed for all target domains (domain controllers) connected to the Ethernet through the IEEE802.1AS protocol, to ensure that at a current moment, in all target domains, there is only one ECU in one target domain having the reception time slot or transmission time slot in an activated state, and the reception time slot or transmission time slot corresponding to any of other ECUs is in a blocked state. For example, the reception time slot and the transmission time slot corresponding to each ECU are time periods, and the reception time slots corresponding to all the ECUs are accumulated in sequence to form a request cycle, and the transmission time slots corresponding to all the ECUs are accumulated in sequence to form a response cycle. The time periods corresponding to the reception time slot and the transmission time slot can be identical, and the time periods corresponding to the request cycle and the response cycle can also be identical. For example, for the reception time slot, if the reception time slot corresponding to each ECU is 200 microseconds (µs) and the number of ECUs to be flashed is 10, the request cycle can be: 200µs×10= 2000µs. The starting moment of the request cycle is the starting moment of the reception time slot corresponding to the first ECU, a range of the reception time slot corresponding to the first ECU can be [0, 200µs). At the end of the reception time slot corresponding to the first ECU, it enters the starting moment of the reception time slot corresponding to the second ECU, and a range of the reception time slot corresponding to the second ECU may be [200µs, 400µs), and so on. The reception time slots corresponding to respective ECUs are activated sequentially within the request cycle.

At step S310, a request message to be processed is obtained, in which the request message includes an ID of a target domain and an ID of an ECU to be flashed.

It is understandable that the request message to be processed is obtained, and the request message to be processed is a request message sent to the ECU to be flashed. The request message to be processed can be generated by the cloud server and sent to the upgrade management program.

It is understandable that the request message includes the ID of the target domain and the ID of the ECU to be flashed. The target domain may refer to the domain controller in FIG. 3. The ID of the target domain may be an address of the target domain. According to the address of the target domain, the target domain to which the request message is to be sent is determined. The ID of the ECU to be flashed may be an address of the ECU. According to the address of the ECU, the ECU to which the request message is forwarded by the target domain at the starting moment of the reception time slot is determined. The request message may also include data to be flashed for flashing the ECU.

For example, as illustrated in FIG. 2, the ID of the target domain in the request message may be an ID of the first domain controller of the domain controllers 240 from left to right. The ID of the ECU may be an ID of the first ECU of the ECUs from top to bottom, that are connected to the first domain controller in the domain controllers 240. At the starting moment of the reception time slot corresponding to the first ECU, the request message is sent to the first domain controller, and then the first domain controller forwards the request message to the first ECU.

At step S320, at a starting moment of a reception time slot corresponding to the ECU, the request message is sent to the ECU through the target domain based on the ID of the target domain and the ID of the ECU.

It is understandable that on the basis of the above S310, after determining the target domain and the ECU to which the request message is to be sent based on the ID of the target domain and the ID of the ECU in the request message at the starting moment of the reception time slot corresponding to the ECU, the upgrade management program sends the request message to the ECU through the target domain.

It is understandable that the target domain is used to receive and forward the request message, and the target domain is able to receive the request message only at the starting moment of the reception time slot corresponding to the ECU. The target domain is unable to receive the request message before the starting moment of the reception time slot corresponding to the ECU. However, the target domain can send the request message to the ECU without waiting for the reception time slot to start, it can send the request message to the ECU as soon as it receives the request message, or it can send the request message to the ECU after a preset period of time, which is not limited here.

For example, as illustrated in FIG. 4, an upgrade management program 410 is connected to three domain controllers 420, 430 and 440 via the time-sensitive Ethernet. The domain controller 420 is connected to three ECUs, i.e., ECU 421, ECU 422 and ECU 423. The domain controller 430 is connected to three ECUs. The domain controller 440 is connected to two ECUs, and each ECU corresponding to a time slot, which is used to control data transmission between the upgrade management program 410 and the domain controller 420. For example, at the starting moment of the time slot corresponding to the ECU 421, the upgrade management program 410 sends the request message to the domain controller 420, and the domain controller 420 may send the received request message to the ECU 421. At the end of the reception time slot corresponding to the ECU 421, the reception time slot corresponding to the ECU 422 begins, and so on, until the reception time slots corresponding to the ECUs connected to the domain controller 440 end.

At step S330, at a starting moment of a transmission time slot corresponding to the ECU, a response message generated by the ECU based on the request message is received through the target domain.

It is understandable that the ECU is used to receive the request message, generate the response message according to the request message, and send the response message to the target domain.

It is understandable that at the starting moment of the transmission time slot corresponding to the ECU, the target domain returns the received response message to the upgrade management program via the backbone network. That is, the upgrade management program receives the response message sent by the target domain.

For example, as illustrated in FIG. 4, after the domain controller 420 receives the response message sent by the ECU 421, the domain controller 420 sends the response message to the upgrade management program 410 at the starting moment of the transmission time slot corresponding to the ECU 421.

According to the method for flashing an ECU provided by the embodiments of the disclosure, a request message to be processed is obtained, in which the request message includes an ID of a target domain and an ID of an ECU. At a starting moment of a reception time slot corresponding to the ECU, the ID of the target domain and the ID of the ECU in the request message are read, and the request message is sent to the ECU through the target domain. At a starting moment of a transmission time slot corresponding to the ECU, a response message generated by the ECU according to the request message is returned to the upgrade management program through the target domain. The disclosure is capable of transmitting request messages or response messages in an orderly manner by taking the time-sensitive Ethernet as the backbone network, which effectively avoids the problem of data collision and frame loss during transmission of a large amount of data, increases the success rate of flashing, and further reduces the complexity of flashing software of the client. In addition, the disclosure makes full use of the bandwidth of the backbone network to ensure the accuracy of the transmitted data, and also improves the flashing efficiency and reduces the flashing time.

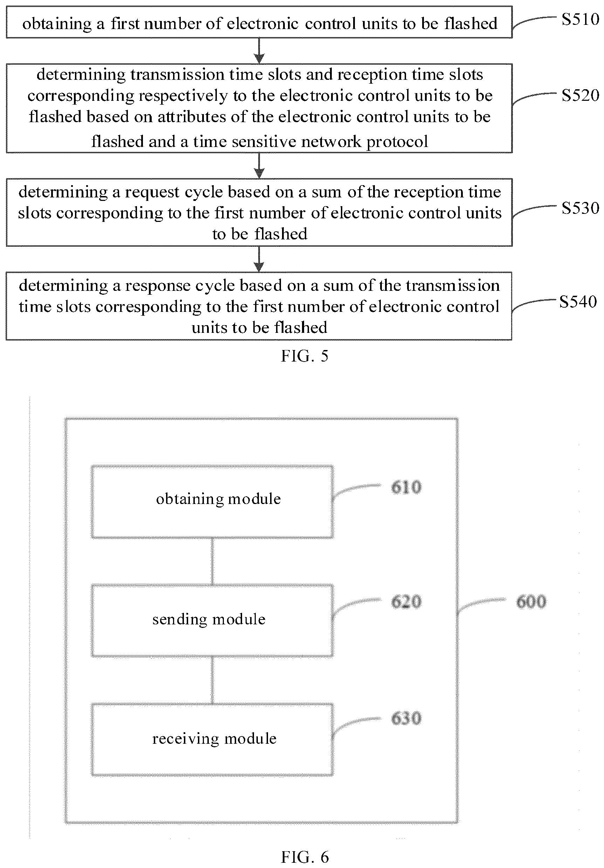

Optionally, on the basis of the above embodiments, before obtaining the request message to be processed, the flashing method further includes the following steps S510 to S540 as shown in FIG. 5.

At step S510, a first number of ECUs to be flashed is obtained.

It is understandable that the first number of ECUs to be flashed of a vehicle terminal is obtained, which indicates how many ECUs need to be flashed.

For example, as illustrated in FIG. 4, the first number of ECUs to be flashed under 3 domain controllers is 8. It is understandable that the domain controller 420 may be connected to more than 3 ECUs, for example, it may be connected to 5 ECUs, but only 3 of them need to be flashed, i.e., only ECU 421, ECU422 and ECU423 need to be flashed and the remaining 2 ECUs do not need to be flashed. Therefore, it is only required to obtain the number of ECUs to be flashed, and the domain controller 430 and the domain controller 440 may be set up in a similar manner as the domain controller 420, which is not limited herein.

At step S520, transmission time slots and reception time slots corresponding respectively to the ECUs to be flashed are determined based on attributes of the ECUs to be flashed and a TSN protocol.

It is understandable that on the basis of the above S510, according to the attributes of the ECUs to be flashed and the TSN protocol (IEEE802.1QBV protocol), the reception time slot and the transmission time slot corresponding to each ECU are determined, and the reception time slots and the transmission time slots of respective ECUs can be the same or different. The attribute of the ECU can be a processing capability of the ECU, i.e., an efficiency of the ECU in processing messages. If the efficiency of the ECU in processing messages is fast, the reception time slot and the transmission time slot corresponding to the ECU can be determined as a small time period, or can be set according to the user needs. The reception time slot and the transmission time slot corresponding to the ECU can be determined according to attributes of the CAN bus. For example, the CAN bus can transmit 4 messages in 1ms (millisecond), and 1 message takes up 250µs at most, and thus the reception time slots and the transmission time slots corresponding to all ECUs connected to the CAN bus can be set to 250µs.

At step S530, a request cycle is determined based on a sum of the reception time slots corresponding to the first number of ECUs to be flashed.

It is understandable that on the basis of the above S520, the request cycle is determined according to the sum of the reception time slots corresponding to the first number of ECUs to be flashed, i.e., the cumulated sum of each reception time slot is the duration of the request cycle.

For example, if the first number of ECUs to be flashed is 8 and the reception time slot corresponding to each ECU is 250µs, the request cycle is the sum of the reception time slots corresponding to the 8 ECUs, i.e., 8×250µs=2000µs. The reception time slots corresponding to respective ECUs can be different, and can be determined by itself according to actual needs.

Alternatively, on the basis of the above S530, when sending the request message or the response message, it is required to further determine whether it is within the request cycle or the response cycle. If it is within the request cycle, the request message is sent to the ECU through the target domain at the starting moment of the reception time slot corresponding to the ECU. If it is within the response cycle, the response message generated by the ECU according to the request message is received through the target domain at the starting moment of the transmission time slot corresponding to the ECU.

It is understandable that if it is within the duration of the request cycle (within 2000µs), in the reception time slot corresponding to each ECU (within 250µs), the time-sensitive Ethernet transmits the request message. If it is within the duration of the response cycle, in the transmission time slot corresponding to each ECU, the time-sensitive Ethernet transmits the response message. The request cycle and the response cycle are iterated sequentially. That is, after the request cycle ends, it enters the response cycle, and after the response cycle ends, it enters the request cycle again until all ECUs to be flashed are flashed. The cloud server processes and sends the request message to all ECUs to be flashed within the request cycle, which ensures orderly transmission of data, i.e., only the cloud server sends data within the same time period, and also makes full use of the network bandwidth of the backbone network, thereby improving a processing efficiency of the cloud server.

Alternatively, on the basis of the above S530, determining the starting moments of the reception time slots corresponding to the one or more ECUs connected to each target domain includes: within the request cycle, the reception time slots corresponding to the first number of ECUs included in the request cycle sequentially enter the starting moments of respective time slots; and within the response cycle, the transmission time slots corresponding to the first number of ECUs included in the response cycle sequentially enter the starting moments of respective time slots.

It is understandable that within the request cycle, the reception time slots corresponding to the first number of ECUs to be flashed sequentially enter the starting moments of respective time slots. For example, as illustrated in FIG. 4, the reception time slot corresponding to each ECU is set to 250µs, and the sum of the reception time slots corresponding to the 8 ECUs to be flashed, i.e., the request cycle, is 2000µs, the reception time slot corresponding to the first ECU 421 is 250µs. When it enters the request cycle, that is, at the starting moment of the reception time slot corresponding to the ECU 421, the time range of the reception time slot corresponding to the ECU 421 is [0, 250µs). At the end of the reception time slot corresponding to the ECU 421, it enters the starting moment of the reception time slot corresponding to the ECU 422, the time range of the reception time slot corresponding to the ECU is [250µs, 500µs), the time range of the reception time slot corresponding to the ECU 423 is [500µs, 750µs), and so on, until the request cycle ends.

At step S540, a response cycle is determined based on a sum of the transmission time slots corresponding to the first number of ECUs to be flashed.

It is understandable that based on the above S520, the response cycle is determined according to the sum of the transmission time slots of the first number of ECUs to be flashed, that is, the accumulated sum of each of the transmission time slots is the duration of the response cycle.

It is understandable that within the response cycle, the transmission time slots corresponding to the first number of ECUs to be flashed sequentially enter the starting moments of respective time slots. The division and process of the transmission time slots of respective ECUs are similar to the reception time slots, which will not be repeated herein. It is understandable that regardless of whether it is in the request cycle or the response cycle, only one ECU has the corresponding time slot in an activated state, that is, within the period of one ECU.

According to the method for flashing an ECU provided by the embodiments of the disclosure, the first number of ECUs to be flashed is obtained. The reception time slots and the transmission time slots corresponding to the ECUs are determined according to the attributes of the ECUs and the TSN protocol. The request cycle is determined according to the sum of the first number of reception time slots, and the response cycle is determined according to the sum of the first number of transmission time slots. The reception time slots and the transmission time slots of respective ECUs can be divided accurately, and request messages or response messages are transmitted in different cycles, to ensure the orderliness of data transmission. Moreover, orderly data transmission can be ensured by only transmitting data required by one ECU within one time period, thereby avoiding the problem of data confusion and improving the transmission efficiency.

Alternatively, based on the above embodiments, after determining the schedule cycle, the flashing method further includes: determining a second number of request messages to be processed based on the attribute of the ECU and the request cycle.

It is understandable that according to the processing capability of the ECU and the request cycle, the second number of acquired request messages to be processed is determined. That is, the second number of request messages that can be received and processed by the ECU within a request cycle is determined. Processing the request message means that a response message is generated according to the received request message within the request cycle, so that after iterating to the response cycle, the second number of generated response messages can be returned by the target domain via the time-sensitive backbone network to the upgrade management program at the starting moment of the transmission time slot corresponding to the ECU.

Alternatively, after determining the second number of request messages to be transmitted by the time-sensitive backbone network, transmitting the request messages further includes: transmitting the second number of request messages to the target domain at the starting moment of the reception time slot corresponding to the ECU within the request cycle.

It is understandable that within the request cycle, the upgrade management program sends the second number of request messages to the target domain at the starting moment of the reception time slot corresponding to the ECU. The upgrade management program may send the second number of request messages to the target domain sequentially, or it may send all of the second number of request messages to the target domain at a time, or it may send a preset number of the second number of request messages at a time, as long as the second number of request messages are sent to the target domain within the time period of the reception time slot corresponding to the ECU, which is not limited herein.

Alternatively, within the response cycle, at the starting moment of the transmission time slot corresponding to the ECU, the upgrade management program receives the second number of response messages sent by the target domain.

It is understandable that within the response cycle, at the starting moment of the transmission time slot corresponding to the ECU, the upgrade management program receives the second number of response messages sent by the target domain, and the response message sent by the target domain is in a form similar to the above mentioned request message sent by the upgrade management program, which is not limited herein.

For example, as illustrated in FIG. 4, if the ECU 421 can process 4 frames of messages transmitted via the CAN bus in 1ms and the request cycle is 2000µs, the second number of request messages that can be received and processed by the ECU 421 within the entire request cycle is 2000µs/1000µs×4=8. That is, after receiving 8 request messages, the ECU 421 can generate 8 response messages and send the messages to the domain controller 420 before the end of the request cycle. After entering the response cycle, the domain controller 420 sends the 8 response messages to the upgrade management program 410, that is, the second number of request messages sent by the upgrade management program 410 to the domain controller 420 is up to 8. Correspondingly, the number of request messages sent by the domain controller 420 to the ECU 421 is also up to 8. Meanwhile, within the request cycle, the ECU 421 may generate 8 response messages correspondingly and send the 8 response messages to the domain controller 420. After entering the response cycle, at the starting moment of the transmission time slot corresponding to the ECU 421, the domain controller 420 returns the 8 response messages to the upgrade management program 410.

According to the method for flashing an ECU provided by the embodiments of the disclosure, by determining the second number of request messages to be processed according to the attribute of the ECU and the request cycle, it is possible to accurately determine the number of request messages sent to the ECU to ensure that processing efficiencies of different ECUs in the schedule cycle are relatively high, and the bandwidth of the backbone network can be fully used for transmitting the second number of request messages or response messages to further improve the processing efficiencies of the ECUs.

On the basis of the above embodiments, alternatively, there are reception time slots and transmission time slots corresponding to respective ECUs to be flashed.

It is understandable that each domain controller is connected to one or more ECUs to be flashed, and each ECU to be flashed has the corresponding reception time slots and transmission time slot. According to the TSN protocol, the reception time slots and transmission time slots are divided for respective ECUs in the upgrade management program and the domain controller. Before dividing the reception time slots and transmission time slots, clock synchronization is performed for the upgrade management program and the domain controller, so that the reception time slots and transmission time slots divided for each ECU have the same time reference. That is, it is ensured that the reception time slot and transmission time slot of only one ECU are in the activated state within the request cycle or the response cycle.

Alternatively, the target domain is used to receive one or more response messages sent by the one or more ECUs to be flashed, and is also used to cache the response messages in a queue to be sent. Within the response cycle, at the starting moment of the transmission time slot corresponding to the ECU, the response message corresponding to the ECU and cached in the queue and sent by the target domain is received.

It is understandable that the data transmission process in which the target domain sends the request message to the ECU and the ECU returns the response message to the target domain is not controlled by the transmission time slot. Data transmission between the target domain and the ECU can be carried out at any time. The ECU can immediately transmit the generated response message to the target domain after receiving the request message. However, if it is not in the response cycle and also not in the transmission time slot corresponding to the ECU, the target domain can cache the received response message into the queue to be sent. After a data transmission condition of the target domain is satisfied, the response message is sent to the upgrade management program. The data transmission condition may be entering the response cycle and locating within the transmission time slot corresponding to the ECU. It is understandable that some response messages may not be sent to the upgrade management program through the target domain in one response cycle.

For example, as illustrated in FIG. 4, the ECU 421 may generate 8 response messages, and send the response messages to the domain controller 420 as soon as each response message is generated. The domain controller 420 caches the received 8 response messages in the queue to be sent sequentially. After entering the response cycle and at the starting moment of the transmission time slot corresponding to the ECU 421, the domain controller 420 sends the 8 response messages in the queue to be sent that correspond to the ECU 421 to the upgrade management program 410.

For example, the ECU 421 receives 8 request messages within the first request cycle, but at the end of the first request cycle and at the starting moment of the first response cycle, the ECU 421 generates only 6 response messages according to the request messages, sends the 6 response messages to the domain controller 420, and caches the 6 response messages in the queue to be sent of the domain controller 420, so that the domain controller 420 sends the 6 response messages to the upgrade management program 410 within the first response cycle, and the domain controller 420 can send the remaining 2 response messages to the upgrade management program 410 within the second response cycle.

The method for flashing an ECU provided by the embodiments of the disclosure, by caching the response messages generated by the ECU in the queue to be sent of the target domain, the response messages can be fed back to the upgrade management program in a timely manner, to improve the efficiency of flashing the ECU, ensure the accuracy of data transmission, and avoid the phenomenon of missing data during transmission.

FIG. 6 is a block diagram of an apparatus 600 for flashing an ECU provided by an embodiment of the disclosure. The apparatus can execute the process provided by the embodiments of the method for flashing an ECU. As illustrated in FIG. 6, the apparatus 600 includes:
an obtaining module 610, configured to obtain a request message to be processed, wherein the request message comprises an ID of a target domain and an ID of an electronic control unit to be flashed;
a sending module 620, configured to, at a starting moment of a reception time slot corresponding to the electronic control unit, send the request message to the electronic control unit through the target domain based on the ID of the target domain and the ID of the electronic control unit; and
a receiving module 630, configured to, at a starting moment of a transmission time slot corresponding to the electronic control unit, receive a response message generated by the electronic control unit based on the request message through the target domain.

Alternatively, the apparatus 600 further includes a determining module. The determining module is configured to: obtain a first number of ECUs to be flashed; determine transmission time slots and reception time slots corresponding respectively to the ECUs to be flashed based on attributes of the ECUs to be flashed and a TSN protocol; determine a request cycle based on a sum of the reception time slots corresponding to the first number of ECUs to be flashed; and determine a response cycle based on a sum of the transmission time slots corresponding to the first number of ECUs to be flashed.

Alternatively, the sending module 620 is further configured to: within the request cycle, at the starting moment of the reception time slot corresponding to the ECU, send the request message to the ECU through the target domain. The receiving module 630 is further configured to: within the response cycle, at the starting moment of the transmission time slot corresponding to the ECU, receive the response message generated by the ECU based on the request message through the target domain.

Alternatively, the apparatus 600 further includes a quantity module. The quantity module is configured to: determine a second number of request messages to be processed based on the attribute of the ECU and the schedule cycle.

Alternatively, the sending module 620 is further configured to:
within the request cycle, at the starting moment of the reception time slot corresponding to the ECU, send the second number of request messages to the ECU through the target domain.

Alternatively, the target domain in the apparatus 600 is used to receive one or more response messages sent by one or more ECUs to be flashed, and is also used to cache the one or more response messages into a queue to be sent.

Alternatively, the receiving module 630 is further configured to:
within the response cycle, at the starting moment of the transmission time slot corresponding to the ECU, receive the response message corresponding to the ECU that is cached in the queue to be and sent by the target domain.

Alternatively, in the apparatus 600, within the request cycle, the reception time slots corresponding to the first number of ECUs included in the request cycle sequentially enter respective starting moments. Within the response cycle, the transmission time slots corresponding to the first number of ECUs included in the response cycle sequentially enter respective starting moments.

The apparatus 600 of the embodiment shown in FIG. 6 may be used to perform the technical solution of the above embodiments of the method for flashing an ECU, and the implementation principles and technical effects are similar, which will not be repeated herein.

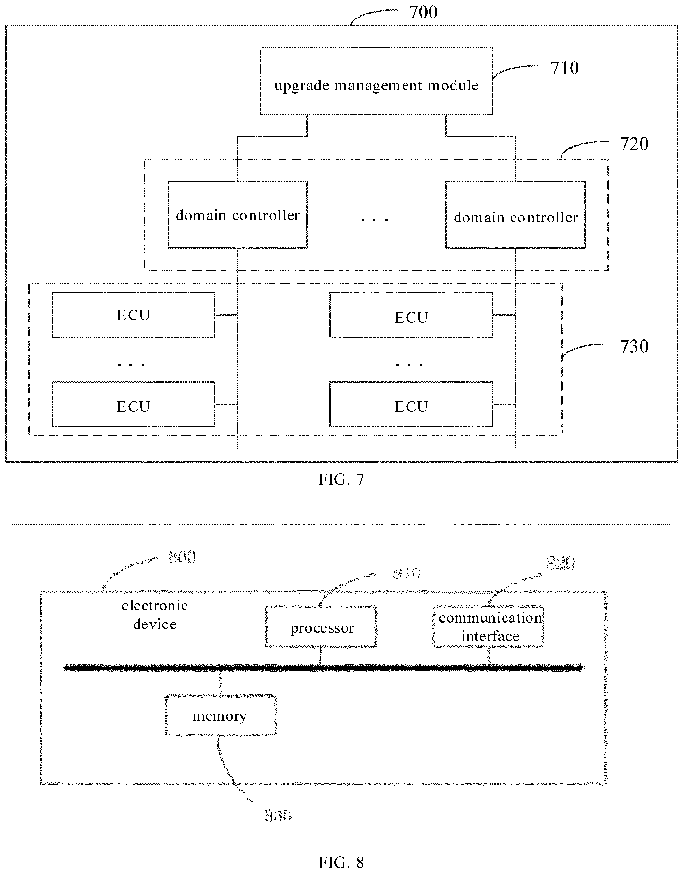

FIG. 7 is a block diagram of a system for flashing an ECU provided by an embodiment of the disclosure. The system 700 includes an upgrade management module 710, a target domain 720, and an ECU 730. The target domain 720 may refer to the domain controller 720 of FIG. 7.

The upgrade management module 710 is connected to the one or more target domains 720 via a network. The target domain 720 is connected to the one or more ECUs 730 via a bus.

The upgrade management module 710 is used to perform the method for flashing the ECU described above.

It is understandable that the process of the system 700 for flashing the ECU 730 can be referred to the above-described method for flashing the ECU, and will not be repeated herein.

The system for flashing an ECU of the embodiment shown in FIG. 7 may be used to perform the technical solution of the above embodiments of the method for flashing an ECU, and the implementation principles and technical effects are similar, which will not be repeated herein.

FIG. 8 is a block diagram of an electronic device provided by an embodiment of the disclosure. The electronic device provided by the embodiments of the disclosure may perform the process provided by the above embodiments. As illustrated in FIG. 8, the electronic device 800 includes: a processor 810, a communication interface 820, and a memory 830. The computer program is stored in the memory 830, and the processor 810 is configured to perform the method for flashing the ECU as described above.

In addition, the embodiments of the disclosure provide a computer-readable storage medium having computer programs stored thereon. When the computer programs are executed by a processor, the method for flashing the ECU of the above embodiments is implemented.

In addition, the embodiments of the disclosure provide a computer program product including computer programs or instructions. When the computer programs or instructions are executed by a processor, the method for flashing the ECU of the above embodiments is implemented.

Those skilled in the art will appreciate that the embodiments of the disclosure may be provided as methods, systems, or computer program products. Therefore, the embodiments of the disclosure may be implemented as entirely hardware embodiments, entirely software embodiments, or a combination of software embodiments and hardware embodiments. Moreover, the disclosure may take the form of a computer program product implemented on one or more computer-usable storage medium (including, but not limited to, disk memory, CD-ROM, optical memory, etc.) having computer-usable program codes embodied therein.

The disclosure is described with reference to flowcharts and/or block diagrams of methods, apparatus (systems), and computer program products according to embodiments of the disclosure. It is understood that the computer program instructions are used to implement each process and/or block in the flowcharts and/or block diagrams, and combinations of processes and/or blocks in the flowcharts and/or block diagrams. These computer program instructions may be provided to a processor of a general purpose computer, a dedicated computer, an embedded processor or other programmable data processing devices to produce a machine, such that the computer or a processor of other programmable data processing devices can be used as a device to execute the instruction to implement the functions in one or more processes of the flowchart and/or one or more blocks of the block diagram.

These computer program instructions may also be stored in a computer-readable memory capable of directing a computer or other programmable data processing devices to operate in a particular manner, such that the instructions stored in that computer-readable memory produce an article of manufacture including an instructing device, the instruction device implements the functions specified in one or more processes of the flowchart and/or one or more blocks of the block diagram.

These computer program instructions may also be loaded onto a computer or other programmable data processing devices, to cause the computer or other programmable data processing devices to perform a series of operation steps to produce computer-implemented processing, such that the computer or other programmable data processing devices can execute the instruction to implement the functions in one or more processes of the flowchart and/or one or more blocks of the block diagram.

In a typical configuration, the computing device includes one or more Central Processing Units (CPUs), input/output interfaces, network interfaces, and memories.

The memory may include non-permanent memory in the computer-readable medium, in the form of a random access memory (RAM) and/or a non-volatile memory, such as read-only memory (ROM) or flash RAM. The memory is an example of a computer readable medium.

The computer-readable medium includes both permanent and non-permanent, removable and non-removable mediums that can be implemented by any method or technology for storing information. Information may be computer-readable instructions, data structures, program modules, or other data. Examples of computer storage medium include, but are not limited to, a phase change memory (PRAM), a static RAM (SRAM), a dynamic RAM (DRAM), other types of RAM, a ROM, an electrically erasable programmable ROM (EEPROM), a flash memory or other memory technologies, compact disc ROM (CD-ROM), digital versatile disc (DVD) or other optical memories, magnetic tape cassettes, magnetic disk memories or other magnetic storage devices or any other non-transitory medium, which can be used to store information that can be accessed by a computing device. As defined in this article, the computer-readable medium does not include a transitory media, such as modulated data signal and carrier.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a..." does not exclude the presence of additional identical elements in the process, method, article or device that comprises the said element.

The above are only specific embodiments of the disclosure to enable those skilled in the art to understand or realize the disclosure. Various modifications to these embodiments will be apparent to those skilled in the art, and the general principles defined herein may be realized in other embodiments without departing from the scope of the disclosure. Therefore, the disclosure will not be limited to these embodiments herein, but will be subject to the broadest scope consistent with the principles and novel features disclosed herein.

## Claims

1. A method for flashing an electronic control unit (ECU), comprising:
obtaining a request message to be processed, wherein the request message comprises an identification (ID) of a target domain and an ID of an ECU to be flashed;
at a starting moment of a reception time slot corresponding to the ECU, sending the request message to the ECU through the target domain based on the ID of the target domain and the ID of the ECU; and
at a starting moment of a transmission time slot corresponding to the ECU, receiving a response message generated by the ECU based on the request message through the target domain.

2. The method of claim 1, before obtaining the request message to be processed, further comprising:
obtaining a first number of ECUs to be flashed;
determining transmission time slots and reception time slots corresponding respectively to the ECUs to be flashed based on attributes of the ECUs to be flashed and a time sensitive network protocol;
determining a request cycle based on a sum of the reception time slots corresponding to the first number of ECUs to be flashed; and
determining a response cycle based on a sum of the transmission time slots corresponding to the first number of ECUs to be flashed.

3. The method of claim 2, wherein within the request cycle, at the starting moment of the reception time slot corresponding to the ECU, the request message is sent to the ECU through the target domain;
within the response cycle, at the starting moment of the transmission time slot corresponding to the ECU, the response message generated by the ECU based on the request message is received through the target domain.

4. The method of claim 3, after determining the request cycle, further comprising:
determining a second number of request messages to be processed based on the attribute of the ECU and the request cycle.

5. The method of claim 4, wherein within the request cycle, at the starting moment of the reception time slot corresponding to the ECU, sending the request message to the ECU through the target domain, comprises:
within the request cycle, at the starting moment of the reception time slot corresponding to the ECU, sending the second number of request messages to the ECU through the target domain.

6. The method of any one of claims 2-5, wherein within the request cycle, the reception time slots corresponding to the first number of ECUs included in the request cycle sequentially enter respective starting moments; and
within the response cycle, the transmission time slots corresponding to the first number of ECUs included in the response cycle sequentially enter respective starting moments.

7. The method of any one of claims 3-5, wherein the target domain is configured to receive one or more response messages sent by one or more ECUs to be flashed, and cache the one or more response messages into a queue to be sent; and
within the response cycle, at the starting moment of the transmission time slot corresponding to the ECU, receiving the response message generated by the ECU based on the request message through the target domain, comprises:
within the response cycle, at the starting moment of the transmission time slot corresponding to the ECU, receiving the response message corresponding to the ECU that is cached in the queue and sent by the target domain.

8. An apparatus for flashing an electronic control unit (ECU), comprising:
an obtaining module, configured to obtain a request message to be processed, wherein the request message comprises an identification (ID) of a target domain and an ID of an ECU to be flashed;
a sending module, configured to, at a starting moment of a reception time slot corresponding to the ECU, send the request message to the ECU through the target domain based on the ID of the target domain and the ID of the ECU; and
a receiving module, configured to, at a starting moment of a transmission time slot corresponding to the ECU, receive a response message generated by the ECU based on the request message through the target domain.

9. A system for flashing an electronic control unit (ECU), comprising an upgrade management module, one or more target domains and one or more ECUs, wherein the upgrade management module is connected to the one or more target domains via a network, and the one or more target domains are connected to the one or more ECUs via a bus; and
the upgrade management module is configured to implement the method for flashing an ECU of any one of claims 1-7.

10. An electronic device, comprising:
a memory;
a processor; and
computer programs; wherein
the computer programs are stored in the memory, and when the computer programs are executed by the processor, the method for flashing an ECU of any one of claims 1-7 is implemented.

11. A computer-readable storage medium having computer programs stored thereon, wherein when the computer programs are executed by a processor, the method for flashing an ECU of any one of claims 1-7 is implemented.

12. A computer program product comprising computer programs or instructions, wherein when the computer programs or instructions are executed by a processor, the method for flashing an ECU of any one of claims 1-7 is implemented.
